# EUROPEAN PATENT APPLICATION

(11) **EP 2 128 667 A1**
(43) Date of publication of application: **02.12.2009**
(21) Application number: 08711530.9
(22) Date of filing: 19.02.2008
(51) Int. Cl.: G02B 5/30, G02F 1/1335

(54) **GRID POLARIZER**

(30) Priority: 27.02.2007 JP 2007046623
(71) Applicant: Zeon Corporation, Tokyo 100-8246 (JP)
(72) Inventor: UEJIMA, Mitsugu, Tokyo 100-8246 (JP); MURAKAMI, Toshihide, Tokyo 100-8246 (JP)
(74) Representative: Albrecht, Thomas
(86) International application number: PCT/JP2008/052706
(87) International publication number: WO 2008/105261

(57) **Abstract**

There is provided a grid polarizer comprising: a transparent substrate having ridges arranged substantially in parallel in at least one surface of the transparent substrate; a light-absorbing layer (A) deposited on a top surface of the ridge; and a light-absorbing layer (B) deposited in a groove between the ridges, in which, in a cross section that orthogonally intersects a longitudinal direction of the ridge, cross-sectional area of the light-absorbing layer (B) is 20 % or more of cross-sectional area of the space of the groove, height of the ridge is less than 4 times distance between the light-absorbing layer (A) and the light-absorbing layer (B) and height of the ridge is 0.4 to 1.55 times width of the ridge.

## Description

### Technical Field

The present invention relates to a grid polarizer. More particularly, the invention relates to a grid polarizer that has excellent polarization separation performance and a large area.

### Background Art

Ultrafine fabrication technology developed in the semiconductor field has come to be utilized for fabrication of optical elements, and thus new optical elements are being developed.
For example, diffraction gratings are known as optical elements having a periodic fine structure. The diffraction grating has a fine periodic structure with a pitch equal to or about a few times wider than the wavelength of light.
Grid polarizers are known as an optical member that also has a periodic fine structure. The grid polarizer is an optical member that has a grid structure in which a large number of metallic threads (wires) are periodically spaced in parallel. A metallic grid structure in which the grid has a pitch shorter than the wavelength of incident light is so formed as to function as a polarizer that reflects a polarization component parallel to the grid structure, that transmits a polarization component perpendicular to the grid structure and that thus produces a polarized light. It is proposed that this grid polarizer can be utilized as an optical component for an isolator in optical communication or for enhancing a light availability and luminance in a liquid crystal display device.

In Patent Document 1, there is disclosed a grid polarizer fabrication method in which (A) a material having a Mohs hardness of nine or more is processed with high-energy rays and fabricated into a tool where a protrusion being 600 nm or less in width is formed at its end, (B) with this tool, an ultrafine grid shape being 50 to 600 nm in width, 50 to 1000 nm in pitch and 50 to 800 nm in height is formed on a mold member, (C) the ultrafine grid shape on the mold member is transferred to a transparent resin molded product and (D) an electrically conductive reflective material is vapor-deposited onto the transparent resin molded product that has had the ultrafine grid shape transferred thereto. With this fabrication method, a film of the conductive reflective material is formed onto the top surface and side surface of the projection portion. The film is continuous from the top surface to the side surface.
[Patent Document 1] JP-A-2006-17879

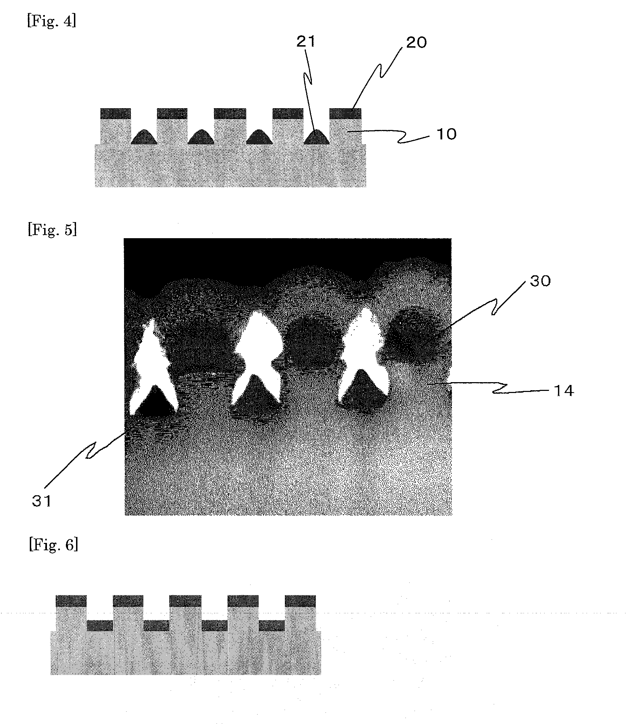

In Patent Documents 2, 3 and 4, there is disclosed a grid polarizer in which fine projections and recesses are formed on the surface of a resin film and an aluminum film is formed on the top surface of the projections and on the bottom surface of the recesses. In the grid polarizer in Patent Documents 2, 3 and 4, as shown in FIG. 6, the thickness of the film formed on the bottom surface of the recess is substantially constant.
[Patent Document 2] JP-A-2006-330521
[Patent Document 3] JP-A-2006-349706
[Patent Document 4] JP-A-2004-240297

### Summary of Invention

### Technical Problem

The inventors of the present invention examined the grid polarizers proposed in Patent Documents described above, and found that, since the grid polarizers had a low light transmittance for short-wavelength light, their polarization separation performance is insufficient and the use of light from a white light source is unsatisfactorily effective.
To overcome the foregoing disadvantage, it is an object of the present invention to provide a grid polarizer that has polarization separation performance with low wavelength dependency and has a large area.

### Solution to Problem

As a result of thorough examination to achieve the above object, the inventors of the present invention found that the following grid polarizer has excellent polarization separation performance: a grid polarizer comprising: a transparent substrate having linear ridges arranged substantially in parallel in at least one surface of the transparent substrate; a light-absorbing layer (A) deposited on a top surface of the ridges; and a light-absorbing layer (B) deposited in a groove between the ridges, in which, in a cross section that orthogonally intersects a longitudinal direction of the ridges, cross-sectional area of the light-absorbing layer (B) is 20 % or more of a cross-sectional area of a space of the groove, height of the ridges is less than 4 times distance between the light-absorbing layer (A) and the light-absorbing layer (B) and height of the ridges is 0.4 to 1.55 times width of the ridges. The present invention is achieved by further examination based on the findings.

Specifically, the present invention includes the following aspects:
(1) A grid polarizer comprising: a transparent substrate having ridges arranged substantially in parallel in at least one surface of the transparent substrate; a light-absorbing layer (A) deposited on a top surface of each of the ridges; and a light-absorbing layer (B) deposited in a groove between the ridges, in which, in a cross section that orthogonally intersects a longitudinal direction of the ridges, a cross-sectional area of the light-absorbing layer (B) is 20 % or more of a cross-sectional area of the space of the groove, height of the ridges is less than 4 times distance between the light-absorbing layer (A) and the light-absorbing layer (B) and height of the ridges is 0.4 to 1.55 times width of the ridges.
(2) The grid polarizer according to (1), in which a thickness of the light-absorbing layer (A) and a thickness of the light-absorbing layer (B) are substantially constant in the longitudinal direction of the ridges, and, in the cross section that orthogonally intersects the longitudinal direction of the ridges, the thickness of the light-absorbing layer (B) is largest in the middle thereof and is smaller toward each end thereof.
(3) The grid polarizer according to (1) or (2), in which, in the cross section that orthogonally intersects the longitudinal direction of the ridges, the minimum thickness of the light-absorbing layer (B) is not more than 0.6 times the maximum thickness of the light-absorbing layer (B).
(4) The grid polarizer according to any one of (1) to (3), in which a pitch between the ridges falls within a range of 120 to 240 nm, and a ratio of width of the ridges to width of the groove falls within a range of 3/7 to 7/3.
(5) The grid polarizer according to any one of (1) to (4), in which, in the cross section that orthogonally intersects the longitudinal direction of the ridges, an average thickness of the light-absorbing layer (A) and an average thickness of the light-absorbing layer (B) fall within a range of 40 to 100 nm, respectively.
(6) The grid polarizer according to any one of (1) to (5), further comprising a protective layer deposited on at least one surface of the grid polarizer.
(7) The grid polarizer according to any one of (1) to (6), in which the transparent substrate is formed of a transparent resin.

(8) A method of fabricating the grid polarizer according to any one of (1) to (7), the method comprising the steps of forming the ridges on a surface of a transparent resin film; and depositing, by physical vapor deposition, the light-absorbing layer (A) and the light-absorbing layer (B) on the surface where the ridges are formed.
(9) The method of fabricating the grid polarizer according to (8), further comprising the step of etching the light-absorbing layer (A) and the light-absorbing layer (B).
(10) The method of fabricating the grid polarizer according to (9), further comprising the step of depositing, by physical vapor deposition, a non-light-absorbing layer on the surface where the ridges are formed before the light-absorbing layer (A) and the light-absorbing layer (B) are deposited.
(11) The method of fabricating the grid polarizer according to (10), in which the step of depositing, by physical vapor deposition, the non-light-absorbing layer on the surface where the ridges are formed is performed by oblique vapor deposition.
(12) The method of fabricating the grid polarizer according to any one of (8) to (11), in which the transparent resin film is long enough to be wound in a form of a roll.
(13) The method of fabricating the grid polarizer according to (12), in which the ridges are formed substantially in parallel to a longitudinal direction of the transparent resin film.

(14) An optical member comprising: the grid polarizer according to any one of (1) to (7); and an optical film.
(15) The optical member according to (14), in which the optical film is an absorptive polarizing film.
(16) A liquid crystal display device comprising the grid polarizer according to any one of (1) to (7).
(17) A liquid crystal display device comprising the optical member according to (14) or (15).

### Advantageous Effects of Invention

The grid polarizer of the present invention can transmit one polarized light beam at a uniformly high transmittance and can reflect another polarized light beam at a uniformly high reflectance within the visible light region from short wavelengths to long wavelengths, and can thereby separate polarized light effectively. By returning the reflected polarized light back to the grid polarizer with a reflector, it is possible to use light from a white light source effectively without waste. The grid polarizer of the present invention is preferably used in a device such as an illumination device or a display device.

### Description of Embodiments

The grid polarizer of the present invention comprises a transparent substrate, a light-absorbing layer A and a light-absorbing layer B. The grid polarizer of the present invention preferably further comprises a protective layer deposited on at least one surface thereof.

### (Transparent substrate)

The transparent substrate used in the present invention is formed of a transparent material. Examples of the transparent material include transparent resin and glass. In these, the transparent resin is preferable.
From a fabrication standpoint, a glass transition temperature of the transparent resin preferably falls within a range of 60 °C to 200 °C, more preferably within a range of 100 °C to 180 °C. The glass transition temperature can be measured by differential scanning calorimetry (DSC).

The transparent resin includes polycarbonate resin, polyether sulfone resin, polyethylene terephthalate resin, polyimide resin, polymethyl methacrylate resin, polysulfone resin, polyarylate resin, polyethylene resin, polyvinyl chloride resin, cellulose diacetate, cellulose triacetate, an alicyclic structure containing polymer and the like. Among them, the alicyclic structure containing polymer is preferable in terms of transparency, low hygroscopic property, dimensional stability and workability.
The alicyclic structure containing polymer includes: a cyclic olefin random copolymer disclosed in JP Laid-Open No. H05-310845; a hydrogenated polymer disclosed in JP Laid-Open No. H05-97978; and a thermoplastic dicyclopentadiene ring-opening polymer and a hydrogenated product thereof disclosed in JP Laid-Open No. H11-124429 (U.S. Patent No. 6,511,756).

The transparent resin used in the present invention may be contain, as appropriate, a compounding agent such as a coloring agent like dyes or pigments, a fluorescent brightening agent, a dispersing agent, a thermal stabilizer, a light stabilizer, an ultraviolet absorbing agent, an antistatic agent, an antioxidizing agent, a lubricating agent, a solvent and the like.

The transparent substrate has ridges on at least one surface thereof. The ridges are thin protrusion portions that extend linearly. A plurality of the thin protrusion portions are arranged substantially in parallel. A groove is formed between the adjacent ridges. That they are arranged substantially in parallel means that the angle between the adjacent two ridges extending in the longitudinal direction falls with the range of ±5°.
The ridge is not particularly limited by the shape of a cross-section that orthogonally intersects the longitudinal direction of the ridge. Examples of the cross-sectional shape include rectangle, trapezoid, rhombus, parabolic shape and the like. The top surface of the ridge is preferably flat because the light-absorbing layer A is easily deposited on the flat top surface. Moreover, the ridge can be shaped to have overhangs extending from the top through both edges. The use of the ridge that has overhangs on both edges facilitates the formation of the light-absorbing layer B having a mound section as described later on the bottom of the groove between the ridges.
Moreover, the groove between the ridges is not particularly limited by the cross-sectional shape of a space that orthogonally intersects the longitudinal direction of the ridge. Examples of the cross-sectional shape include rectangle, trapezoid, rhombus, parabolic shape and the like. The bottom surface of the groove is preferably flat because the light-absorbing layer B is easily deposited on the flat bottom surface. In the present invention, the space of the groove refers to the space that exits before the light-absorbing layer B is deposited.

As an aspect of the ridge, the width T of the opening of the groove can be narrower than the width W of the bottom of the groove or the width A of the top of the ridge can be greater than the width B of the base portion of the ridge.

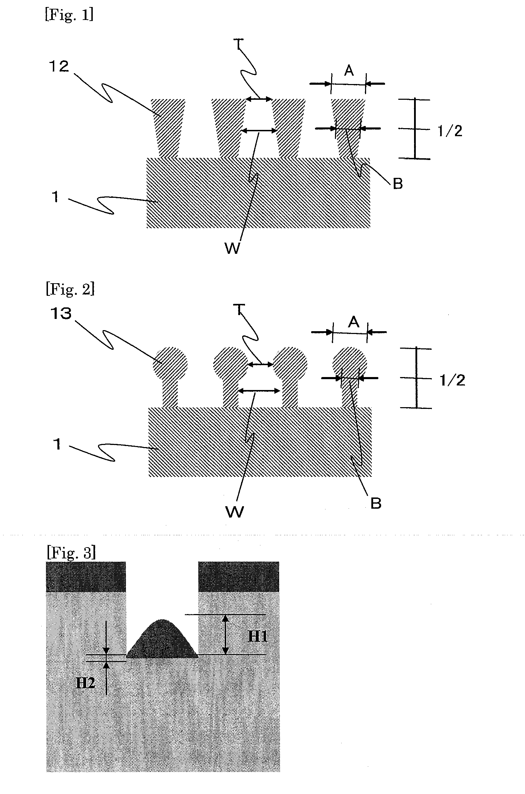

FIG. 1 is a cross-sectional view showing an aspect of the ridges on the transparent substrate. In FIG. 1, ridges 12 in the shape of a trapezoid (in a so-called reversely tapered shape) whose upper base (the width A of the top of the ridge) is longer than the lower base (the width B of the base portion) are shown. The width T of the opening of the groove formed between the ridges 12 whose cross sections are reversely tapered is narrower than the width W of the bottom of the groove.
FIG. 2 is a cross-sectional view showing another aspect of the ridges on the transparent substrate. In FIG. 2, ridges 13 of a cross-sectional shape in which a circle whose diameter (the width A of the top of the ridge) is greater than the width B of the base portion of the ridge is formed at the top thereof are shown. The width T of the opening of the groove formed between the ridges 13 is narrower than the width W of the bottom.

The width B_{1/2} of the ridge at a height level 1/2 times the height H of the ridge is preferably narrower than a width 0.95 times the width A of the top of the ridge. When the ridge and the groove in which the relationship between T and W or the relationship between A and B is satisfied as described above are subjected to physical vapor deposition as described later, it becomes easier not only to deposit the light-absorbing layer A on the top surface of the ridge but also to deposit, on the bottom surface of the groove, the light-absorbing layer B which is thick in the middle and thin in the periphery.

The height H of the ridge preferably falls within a range of 5 to 3000 nm, more preferably within a range of 20 to 1000 nm and particularly preferably within a range of 50 to 300 nm. The depth of the groove is equal to the height of the ridge. In the cross section that orthogonally intersects the longitudinal direction of the ridge, the height of the ridge is 0.4 to 1.55 times the width of the ridge, and is preferably 0.6 to 1.2 times the width of the ridge.
The width T of the opening of the groove is preferably 200 nm or less, and more preferably falls within a range of 20 to 100 nm. The width of the ridge preferably falls within a range of 25 to 300 nm; the length of the ridge is preferably 800 nm or more. The ratio between the widths of the ridge and the groove preferably falls within a range of 3/7 to 7/3, more preferably within a range of 4/6 to 6/4. Here, the widths of the ridge and the groove refer to widths at a height level 1/2 times the height H of the ridge.
The pitch between the ridges preferably falls with a range of 20 to 500 nm, more preferably within a range of 30 to 300 nm and particularly preferably within a range of 120 to 240 nm.

From the viewpoint of handling, the average thickness of the transparent substrate usually falls within a range of 5 µm to 1 mm, preferably within a range of 20 to 200 µm. The transparent substrate preferably has a transmittance of 80 % or more for light within the visible region of 400 to 700 nm.
The transparent substrate is not particularly limited by a retardation Re as measured at wavelength of 550 nm, in which the Re is defined by Re = d × (nₓ - n_{y}) where nₓ and n_{y} represent principal refractive indices in plane of the transparent substrate, nₓ is not less than n_{y}, and d represents the average thickness of the transparent substrate.
The difference between the retardations, that is variations in the retardation, at any two points in a plane is preferably 10 nm or less, more preferably 5 nm or less. When it is used in a liquid crystal display device, if the retardation variation is large, variations in luminance on the display surface are more likely to occur.

The transparent substrate having the ridges described above is obtained by, for example, molding the transparent resin into a film whose surface is flat with a known method and then forming the film surface into a shape corresponding to the ridges. The method for molding the transparent resin into the film includes a cast molding method, an extrusion molding method, an inflation molding method and the like. The shaping method includes a roll embossing method, a photolithograph method and the like.

In the fabrication of the grid polarizer of the present invention, a lengthy film is preferably used. The "lengthy" means that the length is at least 5 times the width, preferably means that the length is 10 or more times the width and specifically means that the film is substantially long enough to be rolled for storing or transport.
The width of the lengthy film is preferably 500 mm or more, more preferably 1000 mm or more. During the fabrication of the grid polarizer of the present invention, both ends of the grid polarizer in the width direction may be arbitrarily cut or trimmed. In this case, the width of the film can be the dimension of the film whose ends have been cut.

When the lengthy film is used, it is preferable that the longitudinal direction of the ridge is substantially parallel to the longitudinal direction of the lengthy film. By making the longitudinal direction of the ridge substantially parallel to the longitudinal direction of the film, a roll of original film for the grid polarizers in which the transmission axis of linearly polarized light is substantially parallel to the width direction is obtained. Since, in a roll of original film for absorptive polarizers, its transmission axis is generally substantially parallel to the width direction, when the roll of original film for the grid polarizers is used, the roll of original film for absorptive polarizers and the roll of original film for the grid polarizers are only pulled out and laminated, with the result that an original film for optical members in which their transmission axes coincide is obtained. The original film for optical members is cut to have a desired size and is used for various applications.

The method of forming a configuration in which the width T of the opening of the groove between the ridges is narrower than the width W of the bottom of the groove or a configuration in which the width A of the top of the ridge is wider than the width B of the base portion is not particularly limited.
For example, there is a method comprising the steps of transferring, with a transfer roll having, on its surface, ridges whose cross section is rectangular, the shape of the ridges to the surface of the lengthy resin film and forming, as a film, a non-light-absorbing layer on the shape-transferred surface by physical vapor deposition. The physical vapor deposition is a method comprising the steps of evaporating and ionizing the material to be deposited and then depositing it on the surface of interest to form a film. Specifically, examples include vacuum vapor deposition, sputtering, ion plating, ion beam deposition and the like. It is possible to select, as appropriate, any one of the above-mentioned methods as physical vapor deposition according to the properties of the material used.
In the film formation by physical vapor deposition, since the material is deposited on the top surface and edge of the ridge, it is possible to fabricate, by physical vapor deposition, the ridge in which width of the top is wider than the width of the base portion.

The material used for the non-light-absorbing layer may be either organic or inorganic. A transparent resin is preferable as the organic material. As the transparent resin, the resins described as examples in the above discussion of the transparent substrate can be used. The inorganic material is not particularly limited as long as it is non-conductive, and silicon oxide, silicon nitride, silicon carbide, aluminum oxide, titanium oxide or the like can be used.

Since it may be difficult to make the width of the top of the ridge sufficiently wider than the width of the base portion of the ridge only by physical vapor deposition, the film (the non-light-absorbing layer) is formed on the top of the ridge by physical vapor deposition, and then etching is performed. In this etching, the film formed by physical vapor deposition serves as an etching mask, and thus the top of the ridge is little etched and the side wall of the base portion of the ridge is mainly etched. Examples of the film formed by physical vapor deposition and serving as the etching mask include a Cr film, a silicon oxide film and the like; it is not limited to these examples. As the etching, wet etching or dry etching can be used; isotropic etching is preferable because the side wall of the base portion of the ridge is mainly etched. In the dry etching, conditions such as an output and a gas pressure are adjusted as appropriate, with the result that it can serve as the isotropic etching.

By obliquely performing physical vapor deposition, it is possible to easily form the ridge in which the width of the top is wider than the width of the base portion.
When physical vapor deposition is obliquely performed, the deposition occurs mainly on the side wall around the top of the ridge, and this makes it difficult for the deposition to occur on the portions behind the ridge that is the opposite side of the ridge and the bottom of the groove. As a result of this, overhangs of the deposited film are formed around the top of the ridge. The angle at which physical vapor deposition is performed can be adjusted as appropriate by the pitch between the ridges or the like. When the direction of the normal to the film is assumed to form an angle of 0°, it is preferable to obliquely perform physical vapor deposition at an angle of 30° or more, and it is more preferable to obliquely perform physical vapor deposition at an angle of 50° or more, with respect to the angle perpendicular to the longitudinal direction of the ridge.

### (Light-absorbing layer)

The light-absorbing layer A is deposited on the top surface of the ridge. The light-absorbing layer B is deposited on the bottom surface of the groove.
On the cross section that orthogonally intersects the longitudinal direction of the ridge, the cross-sectional area of the light-absorbing layer B is 20 % or more of the cross-sectional area of the space of the groove, and preferably falls within a range of 20% to 60% thereof. On the cross section that orthogonally intersects the longitudinal direction of the ridge, the height of the ridge is less than 4 times, preferably 1 to 3 times the distance between the light-absorbing layer A and the light-absorbing layer B.
The cross-sectional area of the space of the groove refers to the cross-sectional area of the space closed by the line between the tops of the adjacent ridges. The distance between the light-absorbing layer A and the light-absorbing layer B refers to the shortest distance between the surfaces of the light-absorbing layers. For example, as shown in FIG. 3, when the rectangular light-absorbing layer A and the mound-shaped light-absorbing layer B are deposited on the ridge and groove in the form of a square wave, the shortest distance is a distance between the bottom left corner of the light-absorbing layer A and the right shoulder of the mound-shaped light-absorbing layer B.

The cross-sectional shape of the light-absorbing layer A is not particularly limited; a rectangle, a trapezoid, a mound-shape or the like can be employed. Preferably, the thickness of the light-absorbing layer A is substantially constant in the longitudinal direction of the ridge. Preferably, in the cross section that orthogonally intersects the longitudinal direction of the ridge, the thickness of the light-absorbing layer A is the largest in the middle, and is smaller toward each end. The average thickness of the light-absorbing layer A is not particularly limited; it generally falls within a range of 20 to 500 nm, preferably within a range of 30 to 300 nm, more preferably within a range of 40 to 200 nm and particularly preferably within a range of 40 to 120 nm. Typically, the width and the length of the light-absorbing layer A are almost determined by the width and the length of the top surface of the ridge.

The cross-sectional shape of the light-absorbing layer B is not particularly limited; a rectangle, a trapezoid, a mound-shape or the like can be employed. Preferably, the thickness of the light-absorbing layer B is substantially constant in the longitudinal direction of the ridge. Preferably, in the cross section that orthogonally intersects the longitudinal direction of the ridge, the thickness of the light-absorbing layer B is the largest in the middle, and is smaller toward each end.
The light-absorbing layer B is preferably shaped to satisfy the formula "0.6 > H₂ / Hi", and is more preferably shaped to satisfy the formula "0.5 ≥ H₂ / H₁ ≥ 0.05" where H₁ represents the largest thickness of the light-absorbing layer B and H₂ represents the smallest thickness of the light-absorbing layer B.
Preferably, the cross section of the light-absorbing layer B is shaped, as shown in FIG. 3 or 4, such that the cross section is high in the middle and is low toward each end, that is, the cross section is mound-shaped. The grid polarizer according to the preferred embodiment of the present invention has a cross-sectional shape as shown in FIG. 4; the ridge and the light-absorbing layer extend in the direction perpendicular to the plane of the figure, with the result that the grid configuration is formed.
The largest thickness of the light-absorbing layer B generally falls within a range of 10 to 120 nm, preferably within a range of 20 to 80 nm; the smallest thickness of the light-absorbing layer B generally falls within a range of 0.5 to 60 nm, preferably within a range of 1 to 40 nm.
Typically, the width and the length of the light-absorbing layer B are almost determined by the width and the length of the bottom surface of the groove.

The light-absorbing layer can be formed by physically depositing electrically conductive material. Metal is preferably used as the electrically conductive material; examples of the electrically conductive material include aluminum, indium, magnesium, rhodium, tin and the like.

The physical vapor deposition refers to the method comprising the steps of evaporating and ionizing the material to be deposited and then depositing it on the surface of interest to form a film. Specifically, examples include vacuum vapor deposition, sputtering, ion plating, ion beam deposition and the like. It is possible to select, as appropriate, any one of the above-mentioned methods. Among them, the vacuum vapor deposition is preferable.
The vacuum vapor deposition refers to the method in which, in a vacuum container, the material to be deposited is heated and vaporized or sublimated and is then deposited on the surface of a substrate placed apart, with the result that a thin film is formed. The heating method can be selected, as appropriate, from methods such as resistance heating, electron beams, high-frequency induction, laser and the like, according to the depositing material or the substrate.

When physical vapor deposition is performed on the surface where the ridges of the transparent substrate are present, the light-absorbing layer A is deposited on the top surface of the ridge, and the light-absorbing layer B is deposited on the bottom surface of the groove. When physical vapor deposition is performed on the surface where the ridges having overhangs on either edge are present, the shielding effects of the overhangs cause conductive material to be little deposited on the bottom surface of the groove near the base portion of the ridge and cause conductive material to be mainly deposited in the middle of the bottom surface of the groove.

The width of the light-absorbing layer A formed by physical vapor deposition may be wider than the width of the top surface of the ridge. Since the width of the light-absorbing layer A is preferably narrower. For example, the light-absorbing layer A is formed and then wet etching is performed, or an etching mask is deposited by physical vapor deposition on the light-absorbing layer A formed by physical vapor deposition and then wet etching is performed, with the result that the width of the light-absorbing layer A can be made narrower.

A material for the etching mask is not particularly limited as long as it withstands the wet etching that will be described later; examples of the material include silicon oxide, silicon nitride, silicon carbide, silicon nitride oxide and the like. Among them, silicon oxide is particularly preferable. The thickness of the etching mask is not particularly limited; it generally falls within a range of 1 to 100 nm, preferably within a range of 2 to 50 nm and more preferably within a range of 3 to 20 nm.

Before the wet etching, stretching in the direction that orthogonally intersects the longitudinal direction of the ridge can be performed. This stretching causes the distance between the centers of the ridges to be increased, and thus the distance between the light-absorbing layers A is increased, with the result that the light transmittance is increased. The light-absorbing layer B formed on the bottom surface of the groove separates from the base portion of the ridge due to the stretching to form a gap therebetween. The wet etching solution that will be described later flows into this gap, and thus both the edges of the light-absorbing layer B are mainly etched away, with the result that the edges can be made thinner than the middle.

The stretching method is not particularly limited; a stretching factor in the direction that orthogonally intersects the longitudinal direction of the ridge preferably falls within a range of 1.05 to 5 times, more preferably within a range of 1.1 to 3 times. A stretching factor in the direction parallel to the longitudinal direction of the ridge preferably falls within a range of 0.9 to 1.1 times, more preferably within a range of 0.95 to 1.05 times. After the stretching, the structure of the ridge is maintained, and the width and the height of the ridge are almost maintained. On the other hand, the pitch between the ridges is made longer than that before the stretching, and preferably falls within a range of 30 to 1000 nm, more preferably within a range of 50 to 600 nm. To perform such stretching, a continuous lateral uniaxially stretching method is preferably employed with a tenter stretching machine.

The wet etching is performed with the etching solution. Any etching solution may be used as long as it can remove part of the light-absorbing layer without corrosion or the like of the transparent substrate; it is selected as appropriate according to the materials of the etching mask, the light-absorbing layer and the transparent substrate. Examples of the wet etching solution include: a solution containing an alkali metal compound such as sodium hydroxide and potassium hydroxide; a solution containing sulfuric acid, phosphoric acid, nitric acid, acetic acid, hydrogen fluoride, hydrochloric acid or the like; ammonium persulfate; hydrogen peroxide; ammonium fluoride; and their compound solutions. An additive such as a surface active agent may be added to the wet etching solution.

This etching removes portions that are not covered by the etching mask or the light-absorbing layer below portions that are covered by thin parts of the etching mask. Specifically, the overhangs deposited on the top of the ridge and the layers deposited on the bottom surface near the base portion of the ridge are removed. The light-absorbing layer A whose width is substantially equal to the width of the ridge is left without being removed. The light-absorbing layer B is left in the middle of the bottom surface of the groove without being removed. In this way, the grid polarizer of the present invention is obtained.

### (Protective layer)

The protective layer is not particularly limited by its materials the protective layer formed of a transparent material is preferable. Examples of the transparent material include glass, an inorganic oxide, an inorganic nitride, a porous material, a transparent resin and the like. Among them, the transparent resin is particularly preferable. The transparent resin can be selected, as appropriate, from those shown as a material for the previously described transparent substrate.
From the viewpoint of handling, the average thickness of the protective layer generally falls within a range of 5 µm to 1 mm, preferably within a range of 20 to 200 µm. The protective layer preferably has a transmittance of 80 % or more for light within the visible region of 400 to 700 nm.

The protective layer is not particularly limited by a retardation Re as measured at wavelength of 550 nm, the Re is defined by Re = d × (nₓ - n_{y}) where nₓ and n_{y} represent principal refractive indices in plane of the protective layer, nₓ is not less than n_{y}, and d represents the average thickness of the protective layer. The difference between retardations Re, that is variations in retardation, at any two points in a plane is preferably 10 nm or less, more preferably 5 nm or less. When it is used in a liquid crystal display device, if the retardation variation is large, variations in luminance on the display surface are more likely to occur.

In order to laminate the protective layer, an adhesive (including a tachiness agent) can be used. The average thickness of the adhesive layer generally falls within a range of 0.01 µn to 30 µm, preferably within a range of 0.1 µm to 15 µm.
Examples of the adhesive include: an acrylic adhesive; a urethane adhesive; a polyester adhesive; a polyvinyl alcohol adhesive; a polyolefin adhesive; a modified polyolefin adhesive; a polyvinyl alkyl ether adhesive; a rubber adhesive; a vinyl chloride-vinyl acetate adhesive; a styrene-butadiene-styrene copolymer (SBS copolymer) adhesive; a hydrogenated SBS (SEBS copolymer) adhesive; an ethylene adhesive such as an ethylene-vinyl acetate copolymer or an ethylene-styrene copolymer; and an acrylic ester adhesive such as an ethylene-methyl methacrylate copolymer, an ethylene-methyl acrylate copolymer, an ethylene-ethyl methacrylate copolymer or an ethylene-ethyl acrylate copolymer.

The grid polarizer of the present invention has the property of transmitting one of two linearly polarized light beams that orthogonally intersect each other, and reflecting the another. By the utilization of the property of separating the linearly polarized light beams into the transmitted light beam and the reflected light beam, the grid polarizer of the present invention can be used, as an optical member for enhancing the luminance of a liquid crystal display device, alone or in combination with other optical film such as an absorptive polarizer or a phase difference plate that is laminated thereon. An adhesive can be interposed between the grid polarizer and the other optical film at their contact surface. Examples of a method of bringing the grid polarizer into intimate contact with the other optical film include a method of passing, pressing and sandwiching the grid polarizer and the other optical film together through a nip between two rolls disposed in parallel.

The absorptive polarizer used in the present invention transmits one of two linearly polarized light beams that orthogonally intersect each other and absorbs the another. Examples of the absorptive polarizer include: one obtained by adsorbing a dichroic material such as iodine or a dichroic dye on a hydrophilic polymer film such as a polyvinyl alcohol film or a partially-saponified ethylene vinyl acetate film and then uniaxially stretching it; one obtained by uniaxially stretching a hydrophilic polymer film and adsorbing a dichroic material thereon; and a polyene oriented film such as a dehydrated polyvinyl alcohol or a dehydrochlorinated polyvinyl chloride. The thickness of the absorptive polarizer generally falls within a range of 5 to 80 µm.

The grid polarizer and the absorptive polarizer are preferably stacked such that the polarization transmission axis of the grid polarizer and the polarization transmission axis of the absorptive polarizer are substantially parallel to each other. With this arrangement, it is possible to effectively convert natural light into linearly polarized light. That the two axes are substantially parallel means that they extends at angles of ±5° with respect to the parallel direction.

The liquid crystal display device of the present invention comprises the grid polarizer described above. The liquid crystal display device has a liquid crystal panel composed of a liquid crystal cell in which polarization transmission axes can be changed by adjustment of voltage and two absorptive polarizers arranged to sandwich the liquid crystal cell. In order to feed light into the liquid crystal panel, a transmissive liquid crystal display device has a backlight device or a reflective liquid crystal display device has a reflective plate on the back side of its display surface.

The grid polarizer of the present invention is disposed between the backlight device and the liquid crystal panel such that light emitted by the backlight device is divided by the grid polarizer into two linearly polarized light beams, one linearly polarized light beam travels toward the liquid crystal panel and the other linearly polarized light beam returns to the backlight device. Since the backlight device generally has the reflective plate, the linearly polarized light beam returned to the backlight device is reflected by the reflective plate, and is returned back to the grid polarizer. The returned light beam is divided again by the grid polarizer into two polarized light beams. This process is repeated, and thus the light emitted by the backlight device is effectively utilized. Consequently, it possible not only to effectively use light such as backlight for displaying an image in a liquid crystal display device but also to illuminate its screen. By the same principle, it is also possible to illuminate the screen in a reflective liquid crystal display device.

### Examples

### (Polarization transmittance, polarization reflectance)

The polarization transmittance and the polarization reflectance of the grid polarizer with respect to light at wavelengths of 450 nm, 550 nm and 650 nm were measured with a spectrophotometer "V-570" (made by "JASCO Corporation"). Linearly polarized light was used for measuring the polarization transmittance and the polarization reflectance; the polarization transmittance was measured with the transmission axis of the grid polarizer parallel to the incoming polarized light. The polarization reflectance was measured at an angle of incidence of 5° with the transmission axis of the grid polarizer perpendicular to the incoming polarized light.

### (Observation of cross-sectional shape of film)

The cross-sectional shape of the film was observed with a transmission electron microscope "H-7500" made by "Hitachi, Ltd." The transmission electron microscopy samples were fabricated with a microsampling device in a focused ion beam fabrication observation device "FB-2100" made by "Hitachi, Ltd."

### Example 1

A surface measuring 0.2 mm × 1 mm on a rectangular parallelepiped single crystal diamond measuring 0.2 mm × 1 mm × 1 mm that was brazed to a shank made of stainless steel and measuring 8 mm × 8 mm × 60 mm was subjected to focused ion beam fabrication using argon ion beams with a focused ion beam fabrication device "SMI3050" made by "Seiko Instruments Inc.", and grooves whose cross section were rectangular, that were parallel to a side 1 mm long, and that were 90 nm wide and 80 nm deep were carved with a pitch of 180 nm, with the result that a cutting tool was fabricated.

The entire curved surface of a cylinder that was 200 mm in diameter and 150 mm in length and that was made of stainless steal of SUS430 was non-electrolytically nickel-phosphorous plated such that the plating thickness was 100 µm. The non-electrolytically nickel-phosphorous plated surface was subjected to a grinding process performed by a precision cylindrical grinding machine "S30-1" made by "Studer Co., Ltd." into which the cutting tool was set, so that ridges 90 nm in width and 80 nm in height with a rectangular cross section were formed with a pitch of 180 nm in a direction parallel to a circumferential direction of the cylinder, with the result that a transfer roll was obtained.
The cutting tool and the transfer roll were fabricated in a constant-temperature low-vibration room in which the temperature was maintained at 20.0 ± 0.2 °C and variations in vibration at frequencies of 0.5 Hz or more were controlled, by a vibration control system made by "Showa science Co. Ltd.", to be 10 µm or less.

The shape on the transfer roll was transferred to the surface of a cycloolefin polymer film "ZF-14" having a thickness of 100 µm and made by "Zeon Corporation", using a transfer device in which a rubber nip roll 70 mm in diameter and the transfer roll were set, on conditions that the surface temperature of the transfer roll was 160 °C, the surface temperature of the nip roll was 100 °C, the film transport tension was 0.1 kgf/mm2 and the nip pressure was 0.5 kgf/mm.
It was observed, with the transmission electron microscope, that the grooves whose opening 90 nm wide and 80 nm deep with a rectangular cross section were formed with a pitch of 180 nm in the film surface obtained.

On the surface of the film where the grooves were formed, SiO₂ was applied by sputtering at an angle of 70° with respect to a direction perpendicular to the film in the presence of argon gas at an output of 400 W, and then SiO₂ was likewise applied by sputtering at an angle of 70° toward the opposite side. Then, aluminum was vacuum deposited on the film from a direction perpendicular to the film.

The film was immersed, for 30 seconds, in an etching solution that was composed of 5.2 % by weight of nitric acid, 73.0 % by weight of phosphoric acid, 3.4 % by weight of acetic acid and the remainder of water (the concentration of acid components: 81.6 % by weight) and that was maintained at a temperature of 33 °C and then was dried at a temperature of 120 °C for 5 minutes, with the result that the grid polarizer was fabricated.
It was observed, with the transmission electron microscope, that the maximum thickness of the aluminum layer deposited on the top surface of the ridge was 70 nm; the maximum thickness H₁ and the minimum thickness H₂ of the aluminum layer deposited on the bottom surface of the groove were 60 nm and 4 nm. The cross-sectional area of the aluminum layer deposited on the bottom surface of the groove was 45.5 % of the cross-sectional area of the space of the groove, and the distance between the aluminum layer deposited on the top surface of the ridge and the aluminum layer deposited on the bottom surface of the groove was 33 nm.

The side of the aluminum layer of the grid polarizer was laminated with a protective film composed of triacetyl cellulose by use of urethane adhesive. The laminated member was supplied to the nip of pressure roller and was press-bonded to and attached to each other, with the result that a grid polarizer 1 with the protective layer was obtained.
The obtained grid polarizer 1 with the protective layer was cut into predetermined sized pieces, and they were evaluated. The evaluation results are shown in Table 1. FIG. 5 is a view showing a SEM photograph of the grid polarizer. In FIG. 5, the transparent substrate appears white in the lower side and three rectangular ridges are shown. In the groove between the ridges, the mound-shaped light-absorbing layer B is shown in black. On the top of the ridge, the rectangular light-absorbing layer A is shown in black.
The film for use in each step was wound on a roll, the process in each step was performed while the film was pulled out of the roll and the film was wound back on the roll after completion of the process.

### Example 2

A surface measuring 0.2 mm × 1 mm on a rectangular parallelepiped single crystal diamond measuring 0.2 mm × 1 mm × 1 mm that was brazed to a shank made of stainless steel and measuring 8 mm × 8 mm × 60 mm was subjected to focused ion beam fabrication using argon ion beams with the focused ion beam fabrication device "SMI3050" made by "Seiko Instruments Inc.", and grooves whose cross section were rectangular, that were parallel to a side 1 mm long, and that were 80 nm wide and 80 nm deep were carved with a pitch of 160 nm, with the result that a cutting tool was fabricated.

The surface of a plate measuring 50 mm × 50 mm × 10 mm in thickness and made of stainless steel of SUS430 was non-electrolytically nickel-phosphorous plated such that the plating thickness was 100 µm. The non-electrolytically nickel-phosphorous plated surface was subjected to a grinding process performed by a precision ultrafine processing machine "NIC200" made by "Nagase Integrex Co. Ltd." into which the cutting tool was set, so that ridges 80 nm in width and 80 nm in height with a rectangular cross section were formed with a pitch of 160 nm, with the result that a mold was obtained.
The cutting tool and the mold were fabricated in a constant-temperature low-vibration room in which the temperature was maintained at 20.0 ± 0.2 °C and variations in vibration at frequencies of 0.5 Hz or more were controlled, by a vibration control system made by "Showa science Co. Ltd.", to be 10 µm or less.

An application solution was made that was composed of 86.6 parts by weight of isobornyl acrylate, 9.6 parts by weight of dimethylol tricyclodecane diacrylate and 3.8 parts by weight of a photopolymerization initiator "Irgacure 184" made by "Ciba Specialty Chemicals Corporation."
The cycloolefin polymer film "ZF-14" having a thickness of 100 µm and made by "Zeon Corporation" was subjected to corona discharge treatment for 3 seconds at an output voltage of 100 % and at an output power of 250 W by use of a high-frequency oscillator "Corona Generator HV05-2" made by "Tamtec Co., Ltd." provided with a wire electrode having a diameter of 1.2 mm, an electrode length of 240 mm and a work-electrode to work-electrode distance of 1.5 mm. The application solution was applied to the surface of the corona discharge treated film such that the thickness thereof was 5 µm. The film was laid on the mold so that the application film makes contact with the mold, and the mold was pressed on the application film. Then, ultraviolet rays were applied from the side of the film to cure the application film. The film was removed from the mold. The cured film was found to have the shape of the mold transferred thereto.
It was observed, with the transmission electron microscope, that grooves 80 nm wide and 80 nm deep with a rectangular cross section were formed with a pitch of 160 nm in the film surface obtained.

On the surface of the film where the grooves were formed, aluminum was vacuum deposited from a direction perpendicular to the film.
The film was immersed, for 30 seconds, in the etching solution that was composed of 5.2 % by weight of nitric acid, 73.0 % by weight of phosphoric acid, 3.4 % by weight of acetic acid and the remainder of water (the concentration of acid components: 81.6 % by weight) and that was maintained at a temperature of 33 °C, and was dried at a temperature of 120 °C for 5 minutes, with the result that grid polarizer 2 was fabricated.
It was observed, with the transmission electron microscope, that the maximum thickness of the aluminum layer deposited on the top surface of the ridge was 70 nm; the maximum thickness H₁ and the minimum thickness H₂ of the aluminum layer deposited on the bottom surface of the groove were 60 nm and 8 nm. The cross-sectional area of the aluminum layer deposited on the bottom surface of the groove was 41.8 % of the cross-sectional area of the groove, and the distance between the aluminum layer deposited on the top surface of the ridge and the aluminum layer deposited on the bottom surface of the groove was 33 nm. The evaluation results on the grid polarizer 2 fabricated are shown in Table 1.

### Examples 3 to 6

Except that the conditions on the focused ion beam fabrication, the conditions on the vapor deposition of aluminum and the conditions on the etching were changed, the same operation as in Example 1 was performed to fabricate grid polarizers 3 to 6. The results are shown in Table 1.

### [Table 1]

**Table 1**

| | | | Examples | | | | | | |
|---|---|---|---|---|---|---|---|---|---|
| | | | 1 | 2 | 3 | 4 | 5 | 6 | 7 |
| Transparent substrate | Pitch (nm) | | 180 | 160 | 200 | 240 | 180 | 180 | 120 |
| | Ridge width (nm) | | 90 | 80 | 100 | 120 | 54 | 126 | 60 |
| | Groove width (nm) | | 90 | 80 | 100 | 120 | 126 | 54 | 60 |
| | Ridge height (nm) | | 80 | 80 | 90 | 50 | 70 | 70 | 90 |
| | Ridge height / Ridge width | | 0.89 | 1.00 | 0.90 | 0.42 | 1.30 | 0.55 | 1.50 |
| Conductive layer | Cross-sectional area of layer B / Cross-sectional area of space of groove | | 45.5% | 41.8% | 49.0% | 51.4% | 50.0% | 21.6% | 48.0% |
| | Ridge height / Distance between layers A and B | | 2.4 | 2.4 | 2.6 | 1.9 | 2.4 | 2.2 | 2.0 |
| | Maximum thickness of layer A (nm) | | 70 | 70 | 80 | 70 | 70 | 70 | 100 |
| | Maximum thickness of layer B (nm) | | 60 | 60 | 65 | 55 | 63 | 52 | 48 |
| | Minimum thickness of layer B / Maximum thickness of layer B | | 0.07 | 0.13 | 0.09 | 0.04 | 0.06 | 0.07 | 0.54 |
| Optical properties | Polarization transmittance | 450 nm | 87% | 85% | 83% | 76% | 78% | 76% | 78% |
| | | 550 nm | 90% | 89% | 89% | 80% | 82% | 84% | 81% |
| | | 650 nm | 90% | 89% | 89% | 78% | 83% | 86% | 88% |
| | Polarization reflectance | 450 nm | 88% | 86% | 85% | 86% | 80% | 83% | 86% |
| | | 550 nm | 90% | 89% | 83% | 87% | 81% | 85% | 86% |
| | | 650 nm | 90% | 89% | 85% | 86% | 80% | 84% | 85% |

### Example 7

A photosensitive material (a positive photo resist "ZEP520" made by "Zeon Corporation") was applied to a glass plate measuring 25 mm × 25 mm × 0.5 mm with a spin coater. With an electron beam drawing device, straight lines 60 nm width were drawn in parallel with a pitch of 120 nm in a region measuring 12 mm × 12 mm in the middle portion of the surface to which the photo resist was applied. The glass plate was in contact with a developing solution made by "Zeon Corporation" for about 3 minutes, was washed by water and was dried with a nitrogen gas blower. A grid pattern was formed on the resist film. Cr (chromium) was deposited on the surface where the pattern was formed with an electron beam deposition device. Then, it was immersed in acetone and was ultrasonically cleaned, and thus the resist film was removed. A Cr thin film having a resist pattern serving as a negative pattern was formed on the glass plate. The region where the Cr thin film was formed was dry-etched. The Cr thin film was washed by acid to be removed.
It was observed, with a field-emission transmission electron microscope "S-4700" made by "Hitachi, Ltd.", that grooves 60 nm wide and 90 nm deep with a rectangular cross section were formed with a pitch of 120 nm in the surface of the glass plate obtained. Specimens for SEM observation were fabricated with the focused ion beam fabrication observation device "FB-2100" made by "Hitachi, Ltd."

Then, on the surface of the glass plate where the grooves were formed, polycarbonate was applied by sputtering at an angle of 70° with respect to a direction perpendicular to the glass plate in the presence of argon gas at an output of 40 W, and then polycarbonate was likewise applied by sputtering at an angle of 70° toward the opposite side. Then, aluminum was vacuum deposited from a direction perpendicular to the film, with the result that grid polarizer 7 was obtained.
The surface of grid polarizer 7 obtained where the aluminum layer was formed was observed with the field-emission transmission electron microscope "S-4700" made by "Hitachi, Ltd." Specimens for SEM observation were fabricated with the focused ion beam fabrication observation device "FB-2100" made by "Hitachi, Ltd." The maximum thickness of the aluminum layer deposited on the top surface of the ridge was 100 nm; the maximum thickness H₁ and the minimum thickness H₂ of the aluminum layer deposited on the bottom surface of the groove were 48 nm and 26 nm. The cross-sectional area of the aluminum layer deposited on the bottom surface of the groove was 48.0 % of the cross-sectional area of the groove, and the distance between the aluminum layer deposited on the top surface of the ridge and the aluminum layer deposited on the bottom surface of the groove was 45 nm. The evaluation results on the grid polarizer 7 are shown in Table 1.

### Example 8

Except that the conditions on the dry etching in the region where the Cr thin film was formed were changed, the same operation as in Example 7 was performed to form, with a pitch of 120 nm, grooves 60 nm wide and 70 nm deep with a rectangular cross section on the glass plate.
Then, on the surface of the glass plate where the grooves were formed, aluminum was vacuum deposited from a direction perpendicular to the glass plate. The glass plate was immersed, for 30 seconds, in the etching solution that was composed of 5.2 % by weight of nitric acid, 73.0 % by weight of phosphoric acid, 3.4 % by weight of acetic acid and the remainder of water (the concentration of acid components: 81.6 % by weight) and that was maintained at a temperature of 33 °C; and was dried at a temperature of 120 °C for 5 minutes, with the result that grid polarizer 8 was fabricated.
With the same method as in Example 7, the cross section was observed. The maximum thickness of the aluminum layer deposited on the top surface of the ridge was 70 nm; the maximum thickness H₁ and the minimum thickness H₂ of the aluminum layer deposited on the bottom surface of the groove were 52 nm and 6 nm. The cross-sectional area of the aluminum layer deposited on the bottom surface of the groove was 41.8 % of the cross-sectional area of the groove, and the distance between the aluminum layer deposited on the top surface of the ridge and the aluminum layer deposited on the bottom surface of the groove was 40 nm. The evaluation results on the grid polarizer 8 are shown in Table 2.

### Comparative Example 1

Except that the oblique sputtering of polycarbonate that was performed in Example 7 was not performed on the surface of the glass plate where the grooves were formed, gird polarizer 9 was obtained with the same method as in the Example 7.
With the same method as in Example 7, the cross section was observed. The maximum thickness of the aluminum layer deposited on the top surface of the ridge was 120 nm; the maximum thickness H₁ and the minimum thickness H₂ of the aluminum layer deposited on the bottom surface of the groove were 75 nm and 60 nm. The cross-sectional area of the aluminum layer deposited on the bottom surface of the groove was 78.4 % of the cross-sectional area of the groove, and the distance between the aluminum layer deposited on the top surface of the ridge and the aluminum layer deposited on the bottom surface of the groove was 19 nm. The evaluation results on the grid polarizer 9 are shown in Table 2.

### Comparative Example 2

Except that the conditions on the dry etching in the region where the Cr thin film was formed were changed, the same operation as in Example 7 was performed to form, with a pitch of 120 nm, grooves 60 nm wide and 100 nm deep with a rectangular cross section on the glass plate.
Then, on the surface of the glass plate where the grooves were formed, aluminum was vacuum deposited from a direction perpendicular to the glass plate, with the result that the grid polarizer 10 was obtained.
With the same method as in Example 7, the cross section was observed. The maximum thickness of the aluminum layer deposited on the top surface of the ridge was 80 nm; the maximum thickness H₁ and the minimum thickness H₂ of the aluminum layer deposited on the bottom surface of the groove were 60 nm and 55 nm. The cross-sectional area of the aluminum layer deposited on the bottom surface of the groove was 58.0 % of the cross-sectional area of the groove, and the distance between the aluminum layer deposited on the top surface of the ridge and the aluminum layer deposited on the bottom surface of the groove was 42 nm. The evaluation results on the grid polarizer 10 are shown in Table 2.

### Comparative Example 3

The grid polarizer 9 fabricated in Comparative Example 9 was immersed, for 30 seconds, in the etching solution that was composed of 5.2 % by weight of nitric acid, 73.0 % by weight of phosphoric acid, 3.4 % by weight of acetic acid and the remainder of water (the concentration of acid components: 81.6 % by weight) and that was maintained at a temperature of 33 °C; and was dried at a temperature of 120 °C for 5 minutes, with the result that grid polarizer 11 was obtained.
With the same method as in Example 7, the cross section was observed. The maximum thickness of the aluminum layer deposited on the top surface of the ridge was 80 nm; the maximum thickness H₁ and the minimum thickness H₂ of the aluminum layer deposited on the bottom surface of the groove were 60 nm and 35 nm. The cross-sectional area of the aluminum layer deposited on the bottom surface of the groove was 55.6 % of the cross-sectional area of the groove, and the distance between the aluminum layer deposited on the top surface of the ridge and the aluminum layer deposited on the bottom surface of the groove was 42 nm. The evaluation results on the grid polarizer 11 are shown in Table 2.

### Comparative Examples 4 and 5

Except that the conditions on the focused ion beam fabrication, the conditions on the vapor deposition of aluminum and the conditions on the etching were changed, the same operation as in Example 1 was performed to fabricate grid polarizers 12 and 13. The results are shown in Table 2.

### [Table 2]

**Table 2**

| | | | Ex. | Comparative Examples | | | | |
|---|---|---|---|---|---|---|---|---|
| | | | 8 | 1 | 2 | 3 | 4 | 5 |
| Transparent substrate | Pitch (nm) | | 120 | 120 | 120 | 120 | 180 | 180 |
| | Ridge width (nm) | | 60 | 60 | 60 | 60 | 40 | 140 |
| | Groove width (nm) | | 60 | 60 | 60 | 60 | 140 | 40 |
| | Ridge height (nm) | | 70 | 90 | 100 | 100 | 70 | 70 |
| | Ridge height / Ridge width | | 1.17 | 1.50 | 1.67 | 1.67 | 1.75 | 0.50 |
| Conductive layer | Cross-sectional area of layer B / Cross-sectional area of space of groove | | 23.6% | 78.4% | 58.0% | 53.9% | 67.3% | 19.3% |
| | Ridge height / Distance between layers A and B | | 1.75 | 4.70 | 2.40 | 2.40 | 1.80 | 1.80 |
| | Maximum thickness of layer A (nm) | | 70 | 120 | 80 | 80 | 70 | 70 |
| | Maximum thickness of layer B (nm) | | 52 | 75 | 60 | 60 | 63 | 27 |
| | Minimum thickness of layer B / Maximum thickness of layer B | | 0.12 | 0.80 | 0.92 | 0.58 | 0.07 | 0.06 |
| Optical properties | Polarization transmittance | 450 nm | 92% | 56% | 35% | 69% | 50% | 28% |
| | | 550 nm | 94% | 73% | 63% | 78% | 62% | 39% |
| | | 650 nm | 95% | 85% | 69% | 78% | 68% | 47% |
| | Polarization reflectance | 450 nm | 78% | 86% | 88% | 89% | 72% | 85% |
| | | 550 nm | 80% | 86% | 89% | 90% | 74% | 85% |
| | | 650 nm | 80% | 85% | 88% | 90% | 72% | 84% |

### Brief Description of Drawings

Fig. 1 is a cross-sectional view for showing a projection and recess structure of a transparent substrate used in a grid polarizer of the present invention.
Fig. 2 is a cross-sectional view for showing another projection and recess structure of the transparent substrate used in the grid polarizer of the present invention.
Fig. 3 is a cross-sectional view for showing the shape of a light-absorbing layer B formed in a groove.
Fig. 4 is a diagram showing an example of a vertical cross section of the grid polarizer of the present invention.
Fig. 5 is a diagram showing an example of a SEM photograph of a vertical cross section of a grid polarizer obtained in an Example.
Fig. 6 is a diagram showing a vertical cross section of a conventional grid polarizer.

### Reference Signs List

1: Transparent substrate
10, 12, 13 and 14: Ridge
A: Width of the top of the ridge
B: Width of the base portion of the ridge
T: Width of the opening of a groove
W: Width of the bottom of the groove
H1: Maximum thickness of a light-absorbing layer B
H2: Minimum thickness of the light-absorbing layer B
20 and 30: Light-absorbing layer A
21 and 31: Light-absorbing layer B

## Claims

1. A grid polarizer comprising:
a transparent substrate having ridges arranged substantially in parallel on at least one surface of the transparent substrate;
a light-absorbing layer (A) deposited on a top surface of each of the ridges; and
a light-absorbing layer (B) deposited in a groove between the ridges,
in which, in a cross section that orthogonally intersects a longitudinal direction of the ridges, a cross-sectional area of the light-absorbing layer (B) is 20 % or more of a cross-sectional area of a space of the groove, height of the ridges is less than 4 times distance between the light-absorbing layer (A) and the light-absorbing layer (B) and height of the ridges is 0.4 to 1.55 times width of the ridges.

2. The grid polarizer according to claim 1,
in which a thickness of the light-absorbing layer (A) and a thickness of the light-absorbing layer (B) are substantially constant in the longitudinal direction of the ridges, and, in the cross section that orthogonally intersects the longitudinal direction of the ridges, the thickness of the light-absorbing layer (B) is largest in the middle thereof and is smaller toward each end thereof.

3. The grid polarizer according to claim 1 or 2,
in which, in the cross section that orthogonally intersects the longitudinal direction of the ridges, the minimum thickness of the light-absorbing layer (B) is not more than 0.6 times the maximum thickness of the light-absorbing layer (B).

4. The grid polarizer according to any one of claims 1 to 3,
in which a pitch between the ridges falls within a range of 120 to 240 nm, and a ratio of width of the ridges to width of the groove falls within a range of 3/7 to 7/3.

5. The grid polarizer according to any one of claims 1 to 4,
in which, in the cross section that orthogonally intersects the longitudinal direction of the ridges, an average thickness of the light-absorbing layer (A) and an average thickness of the light-absorbing layer (B) fall with a range of 40 to 100 nm, respectively.

6. The grid polarizer according to any one of claims 1 to 5, further comprising a protective layer deposited on at least one surface of the grid polarizer.

7. The grid polarizer according to any one of claims 1 to 6,
in which the transparent substrate is formed of a transparent resin.

8. A method of fabricating the grid polarizer according to any one of claims 1 to 7, the method comprising the steps of:
forming the ridges on a surface of a transparent resin film; and depositing, by physical vapor deposition, the light-absorbing layer (A) and the light-absorbing layer (B) on the surface where the ridges are formed.

9. The method of fabricating the grid polarizer according to claim 8, further comprising the step of:
etching the light-absorbing layer (A) and the light-absorbing layer (B).

10. The method of fabricating the grid polarizer according to claim 9, further comprising the step of
depositing, by physical vapor deposition, a non-light-absorbing layer on the surface where the ridges are formed before the light-absorbing layer (A) and the light-absorbing layer (B) are deposited.

11. The method of fabricating the grid polarizer according to claim 10,
in which the step of depositing, by physical vapor deposition, the non-light-absorbing layer on the surface where the ridges are formed is performed by oblique vapor deposition.

12. The method of fabricating the grid polarizer according to any one of claims 8 to 11, in which the transparent resin film is long enough to be wound in a form of a roll.

13. The method of fabricating the grid polarizer according to claim 12,
in which the ridges are formed substantially in parallel to a longitudinal direction of the transparent resin film.

14. An optical member comprising:
the grid polarizer according to any one of claims 1 to 7; and
an optical film.

15. The optical member according to claim 14,
in which the optical film is an absorptive polarizing film.

16. A liquid crystal display device comprising
the grid polarizer according to any one of claims 1 to 7.

17. A liquid crystal display device comprising:
the optical member according to claim 14 or 15.
